(19) **Europäisches Patentamt**
**European Patent Office**
**Office européen des brevets**

(11) **EP 1 461 934 B1**

(12) **FASCICULE DE BREVET EUROPEEN**

(45) Date de publication et mention
de la délivrance du brevet:
**08.06.2016 Bulletin 2016/23**

(51) Int Cl.:
***H04L 29/12*** *(2006.01)* ***H04L 12/24*** *(2006.01)*

(21) Numéro de dépôt: **02804252.1**

(22) Date de dépôt: **06.12.2002**

(86) Numéro de dépôt international:
**PCT/FR2002/004202**

(87) Numéro de publication internationale:
**WO 2003/049407 (12.06.2003 Gazette 2003/24)**

(54) **PROCÉDÉ ET SYSTÈME D'ADRESSAGE INDIRECT POUR LOCALISER UN ÉLÉMENT CIBLE D'UN RÉSEAU DE COMMUNICATION**

INDIREKTES ADRESSIERUNGSVERFAHREN UND SYSTEM ZUM FINDEN EINES ZIELELEMENTS IN EINEM KOMMUNIKATIONSNETZWERK

INDIRECT ADDRESSING METHOD AND SYSTEM FOR LOCATING A TARGET ELEMENT IN A COMMUNICATION NETWORK

(84) Etats contractants désignés:
**AT BE BG CH CY CZ DE DK EE ES FI FR GB GR IE IT LI LU MC NL PT SE SI SK TR**

(30) Priorité: **07.12.2001 FR 0115818**

(43) Date de publication de la demande:
**29.09.2004 Bulletin 2004/40**

(73) Titulaire: **InfoVista SAS**
**91940 Les Ulis (FR)**

(72) Inventeurs:
• **ADDA, Serge, Henri, Moise**
**F-92160 Antony (FR)**
• **MATHIEU, Loic, Pierre, Alfred**
**F-91470 Limours (FR)**

(74) Mandataire: **Pontet Allano & Associes**
**Parc Les Algorithmes, Bâtiment Platon**
**CS 70003 Saint-Aubin**
**91192 Gif-sur-Yvette Cedex (FR)**

(56) Documents cités:
**WO-A-99/57837       US-A- 5 291 583**
**US-A- 5 588 119      US-B1- 6 292 909**

• **"How to add a Protocol Definition to a Cisco SwitchProbe using SNMP" CISCO TECH NOTES, [en ligne] 18 juin 2001 (2001-06-18), pages 1-3, XP002210621 Extrait de l'Internet: <URL:http://web.archive.org/web/2001061812 5039/http://cisco.com/warp/public/477/SP/a dd_protocol_def.html> [extrait le 2002-08-21]**

## Description

La présente invention a pour objet un procédé d'adressage indirect pour garantir l'adéquation entre un élément cible d'un réseau de communication et un lien permettant la localisation de cet élément cible par un serveur connecté au réseau. Elle vise également un système mettant en oeuvre ce procédé. Elle trouve une application particulièrement intéressante, mais non exclusivement, dans le domaine de la modélisation d'un système d'information, ou réseau de communication, en vue de la mesure des performances et du suivi de qualité de service au sein du système d'information.

La complexité croissante des systèmes d'information qui intègrent notamment des architectures clients-serveurs et des réseaux locaux intégrés, rend de plus en plus difficile une mesure des performances et un suivi efficace de la qualité de service au sein de ces systèmes. De nombreux systèmes présentant des solutions pour gérer de tels réseaux souhaitent améliorer l'ergonomie de la commande des systèmes en remplaçant les valeurs brutes, généralement numériques, destinées à distinguer les instances connectées aux réseaux par une forme alphanumérique plus explicite. C'est par exemple le cas lorsqu'on remplace les adresses ou numéros d'interface de chaque instance d'un réseau par un nom désignant directement l'instance en question tel que par exemple "Ethernet", "Serial"... Pratiquement, le nom "Ethernet" est attaché à un lien qui indique le chemin vers l'instance en question.

Or un tel procédé peut être source de problème lorsque l'instance est matériellement déplacée dans le réseau sans que la mise à jour du lien soit effectuée. Ainsi, lorsqu'un utilisateur saisit le nom "Ethernet" pour consulter l'instance associée, il risque de consulter une instance non désirée ou avoir un message d'erreur.

L'invention vise à remédier à cet inconvénient en proposant un procédé d'adressage indirect ou "Lookup Table".

Le document US-A-5 588 119 décrit un procédé permettant de corréler de façon automatique le nom logique d'appareils d'un réseau local avec le port de communication utilisé par la ressource nommée. Le processus décrit fait intervenir trois tables (« Resource Definition File » , « LAN data » et « Hub Data ») que l'on consulte en cascade. Dans chaque table, on considère une variable (« Node ID » ou « Adapter Adress ») pour faire la corrspondance avec une autre table.

Le document US-B1-6 292 909 décrit un système de tests pour vérifier le bon fonctionnement d'un réseau de communication. Le système comprend un serveur de type MIB (management Information Base) relié à de nombreux points du réseau de façon à pouvoir déterminer des dysfonctionnements dans des sous-réseaux.

Le document « How to add a protocol définition to a Cisco switchProbe using SNMP" est un document qui décrit la façon d'ajouter directement des définitions de protocole dans un SwitchProbe de Cisco en utilisant la technologie SNMP.

Le but de la présente invention est de proposer un procédé d'adressage indirect permettant d'améliorer l'ergonomie et la maintenance d'un système de mesure des performances d'un réseau de communication.

Un autre but de l'invention est d'obtenir un gain de temps notable lorsqu'il s'agit de retrouver par exemple le nouvel emplacement d'une instance venant d'être déplacée.

On atteint ces objectifs avec un procédé d'adressage indirect selon la revendication 1.

Le procédé selon l'invention comprend en outre un processus de consultation dans lequel :

- à partir d'une valeur de référence du paramètre de description, on détermine un nouveau nom de description au moyen de la table de description,
- à partir d'un index de référence, on détermine une nouvelle valeur du paramètre de description au moyen de la table d'indexation, et
- on vérifie si le nouveau nom de description et la nouvelle valeur du paramètre de description ainsi déterminés correspondent respectivement à un nom de description de référence et à la valeur de référence du paramètre de description; dans l'affirmative on accède à l'élément cible via un lien de référence; dans la négative on exécute le processus de mise à jour.

La référence peut avantageusement correspondre à un processus de consultation précédent.

L'index correspond à une information sur la localisation physique de l'élément cible. Une modification de cette localisation correspond à une modification dans une des tables. L'invention est ainsi remarquable par le fait qu'elle réalise une mise à jour automatique de nouvelles localisations.

Suivant l'invention, l'index peut être défini dans le serveur comme une valeur pouvant être assignée à une variable d'indexation, cette variable d'indexation étant définie par un ensemble de paramètres d'indexation, cet ensemble étant au moins un sous ensemble des paramètres de description.

En d'autres termes, le procédé selon l'invention met en oeuvre deux tables, une première table de description dans laquelle on peut déterminer la valeur des paramètres de description lorsqu'on assigne à la variable de description un nom de description donné; une seconde table d'indexation dans laquelle on peut déterminer un index donné pour des valeurs données des paramètres de description. Ces tables reflètent l'architecture du réseau, si un élément du réseau est déplacé ou modifié, au moins l'une des deux tables est modifiée.

Le processus de consultation correspond à un fonctionnement normal dans lequel le serveur désire récupérer des informations concernant l'élément cible. Le serveur vérifie que le lien est conforme à l'architecture du réseau, c'est-à-dire que le nom de description renvoie bien au bon index. Pour ce faire, on prend comme référence le processus de consultation précédent, et on vérifie que les tables de description et d'indexation n'ont pas été modifiées. Dans le cas contraire on effectue le processus de mise à jour pour retrouver à quel nouvel index correspond le nom de description désignant l'élément cible.

Avantageusement, l'index peut correspondre à une interface d'un routeur auquel est connecté l'élément cible.

Suivant un autre aspect de l'invention, il est proposé un système d'adressage indirect selon la revendication 3.

Par ailleurs, le serveur comprend en outre, lors d'un processus de consultation :

- des moyens pour déterminer, à partir d'une valeur de référence du paramètre de description, un nouveau nom de description au moyen de la table de description,
- des moyens pour déterminer, à partir d'un index de référence, une nouvelle valeur du paramètre de description au moyen de la table d'indexation, et
- des moyens pour vérifier si le nouveau nom de description et la nouvelle valeur du paramètre de description ainsi déterminés correspondent respectivement à un nom de description de référence et à la valeur de référence du paramètre de description; dans l'affirmative, des moyens pour accéder à l'élément cible via un lien de référence; dans la négative, des moyens pour exécuter le processus de mise à jour.

D'autres particularités et avantages de l'invention apparaîtront encore dans la description ci-après. Aux dessins annexés donnés à titre d'exemples non limitatifs:

- la figure 1 est un schéma d'ensemble illustrant une architecture matérielle formant un réseau de communication sur lequel est mis en oeuvre le procédé selon l'invention dans le cadre d'un système de mesure des performances dudit réseau;
- les figures 2, 3 et 5 comportent chacune une table de description ainsi qu'une table d'indexation illustrant toutes deux un processus de consultation;
- les figures 4 et 6 comportent chacune une table de description ainsi qu'une table d'indexation illustrant toutes deux un processus de mise à jour.

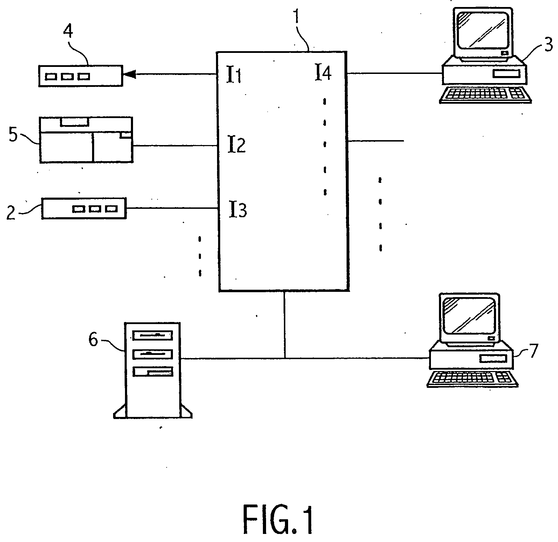

On va maintenant préciser une architecture matérielle formant un réseau dans lequel le procédé selon l'invention est mis en oeuvre conformément à la figure 1. Ce réseau est composé d'éléments ou instances (équipements réseaux, systèmes,...) 1 à 7. La maintenance du réseau est assurée par l'utilisateur 7 au moyen d'un logiciel de mesure des performances installé sur le serveur 6. Un utilisateur peut également agir directement sur le serveur 6 lorsque doté de moyens d'affichage et de saisie de données (écran et clavier) nécessaires. Le routeur 1 comprend une pluralité d'interfaces I1, I2, ..., sur lesquelles sont connectées les instances 2, 3, 4 et 5, globalement appelées ressources distantes. Chaque ressource peut être repérée par un index correspondant à un numéro d'interface à laquelle elle est connectée, par exemple l'index "1" correspondant au numéro d'interface I1. Par ailleurs, chaque ressource comporte un nom de description explicite tel que par exemple "ETHERNET" pour la ressource 2, ou "SERIAL1" pour la ressource 3. Un index attaché à un nom de description constitue un lien que le serveur 6 enregistre lors de l'installation du réseau.

Le fonctionnement du logiciel de maintenance est tel que lorsque l'utilisateur désire obtenir des informations sur la ressource 2, il saisit le nom de description "ETHERNET", et le serveur 6 établit une formule telle que par exemple dans le cas d'un adressage indirect simple :

$$IfInOctets[ifDescr = "Ethernet"] \Leftrightarrow ifInOctets[ifIndex = 3]$$

Ceci revient à compter le nombre d'octets entrant par l'interface I3 (index égal à 3), en d'autres termes on active le lien "3 ⇔ ETHERNET". Cependant lorsque l'on déplace la ressource 2, il est nécessaire de mettre à jour la nouvelle localisation de cette ressource.

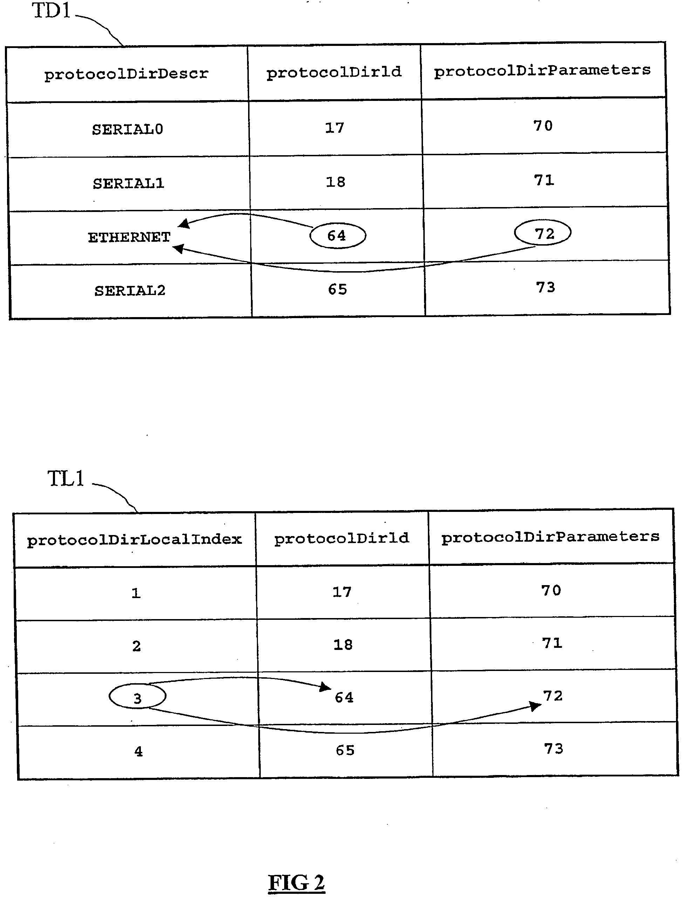

On va maintenant décrire les principaux processus permettant cette mise à jour automatique en se référant successivement aux figures 2 à 6 et en utilisant le logiciel de maintenance dans une configuration d'adressage multiple. En outre ce logiciel traite des données provenant de tout équipement supportant le protocole SNMP (Simple Network Management Protocol), et inclut un support spécialisé pour le standard Remote Monitoring (RMON) MIB. Ce support standard permet l'accès à des groupes de variables tels que nlMatrixDSTable ou encore protocolDirTable.

On considère à priori que la ressource "ETHERNET" est connectée à l'interface I3, et que le serveur désire exécuter la formule suivante provenant de l'utilisateur 7:

$$nlMatrixDSPkts[\ protocolDirDescr\ =\ *.ip.tcp.ftp\ ]\qquad(1)$$

avec nlMatrixDSPkts une variable du groupe nlMatrixDSTable et protocolDirDescr une variable de description du groupe protocolDirTable. Cette variable de description est définie par deux paramètres de description protocolDirId et protocol-DirParameters conformément aux tables TD et TL sur les figures 2 à 6. Ainsi pour chaque nom de description assigné à la variable de description protocolDirDescr, on peut déterminer les valeurs des paramètres protocolDirId et protocol-DirParameters.

Pour exécuter la formule (1), le serveur effectue un premier processus de consultation illustré sur la figure 2, c'est-à-dire une vérification afin de s'assurer que le lien "3 ⇔ ETHERNET" est effectif. Avec la formule (1) et selon le standard RMON MIB, le serveur s'attend à trouver, à la place de la variable de description protocolDirDescr, un paramètre nommé protocolDirLocalindex qui est en fait l'index défini précédemment. Ce paramètre n'est pas inclut dans le groupe nlMatrixDSTable.

Au préalable le serveur effectue une étape d'initialisation dans laquelle il vérifie que dans le groupe protocol-DirTable de la variable de description protocolDirDeser, on trouve également protocolDirLocalindex en tant que variable d'indexation. La variable d'indexation protocolDirLocalIndex est également définie par les paramètres protocolDirId et protocolDirParameters. On poursuit alors le processus en prenant les tables TD1 et TL1 référencées sur la figure 2.

Sur la figure 2, la variable de description protocolDirDescr peut se voir assigner les noms de description de protocoles tels que *.ip.tcp.ftp-data, *.ip.tcp.ftp, ip.tcp.telnet, *.ip.tcp.smtp, *.ip.tcp.dns, *.ip.tcp.gopher, *.ip.tcp.www-http, *.ip.tcp.pop3, *.ip.tcp.nntp.. Les données de référence, notamment obtenues suite à une consultation précédente, sont telles que ETHERNET correspond aux valeurs des paramètres (protocolDirId = 64, protocolDirParameters =72). Le processus de consultation en cours consiste à partir du couple (64, 72) et en utilisant la table TD1 de vérifier si le nom de description correspondant est toujours ETHERNET. Sur la table TD1, on trouve bien que ( 64, 72) donne ETHERNET. Ensuite, sur la table TL1, on voit que l'on peut assigner à la variable d'indexation protocolDirLocalIndex des index de localisation correspondant aux interfaces 11, 12, ... A partir de l'index "3", on vérifie que les valeurs des paramètres sont bien (64, 72). Ce premier processus de consultation au moyen des tables TD1 et TL1 confirme que le lien "3 ⇔ ETHERNET" est effectif. On modifie alors la formule (1) par :

$$nlMatrixDSPkts[\ protocolDirLocalIndex\ =\ 3\ ]$$

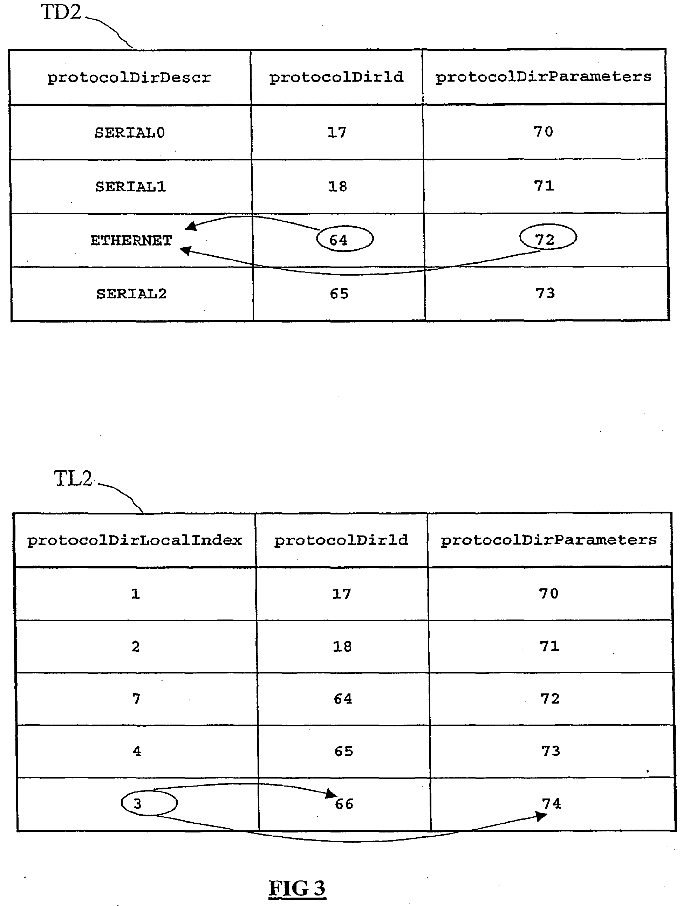

Sur la figure 3, le serveur désire exécuter à nouveau la formule (1), mais entre temps, on a modifié l'architecture matérielle du réseau en connectant la ressource 2 sur l'interface 17 de la figure 1, ceci a entraîné une modification de la table TL conformément à la figure 3. Pour ce faire, on débute un second processus de consultation. On effectue au préalable l'étape d'initialisation, puis on prend la table TD2, on vérifie que le couple de paramètres (64, 72) correspond au nom de description "ETHERNET". On prend ensuite la table TL2, et on voit que l'index "3" ne donne pas le couple (64, 72) mais le couple (66, 74). Dans ce cas, on lance un processus de mise à jour du lien correspondant au nom de description "ETHERNET".

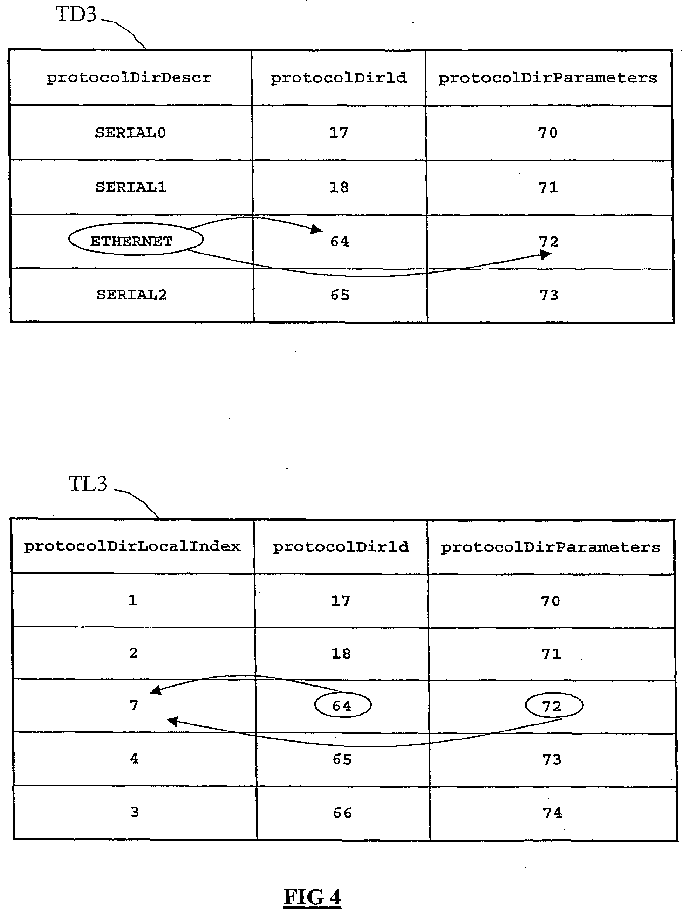

Ce processus de mise à jour est illustré sur la figure 4. On prend la table TD3, et à partir du nom de description "ETHERNET", on détermine le couple de paramètres correspondant. On retrouve le couple (64, 72). On prend ensuite la table TL3, et à partir du couple (64, 72) ainsi déterminé sur TD3, on détermine l'index correspondant, on trouve 7. Le serveur peut ainsi exécuter la formule (1) en la remplaçant par :

$$nlMatrixDSPkts[\ protocolDirLocalIndex\ =\ 7\ ]$$

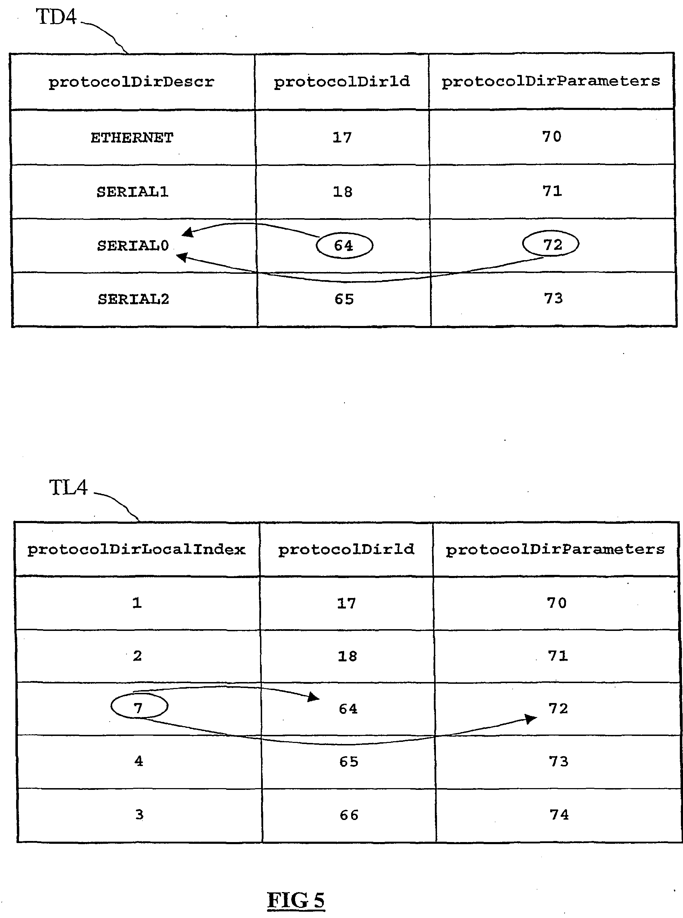

Sur la figure 5, le serveur désire exécuter à nouveau la formule (1), mais entre temps, on a modifié l'architecture matérielle du réseau. La ressource 2 est désormais accessible via l'interface 11 de sorte que seule la table TD4 a été modifiée. On débute un troisième processus de consultation. On effectue au préalable l'étape d'initialisation, puis on prend la table TD4, à partir du couple de paramètres (64, 72) on vérifie si le nom de description correspondant est bien "ETHERNET". On trouve que le couple (64, 72) correspond au nom de description "SERIALO". Dans ce cas, on lance un processus de mise à jour. On peut par ailleurs déterminer sur la table TL4 le couple de paramètres correspondant à l'index 7. On trouve (64, 72), donc il n'y a pas eu de modification dans cette table TL5.

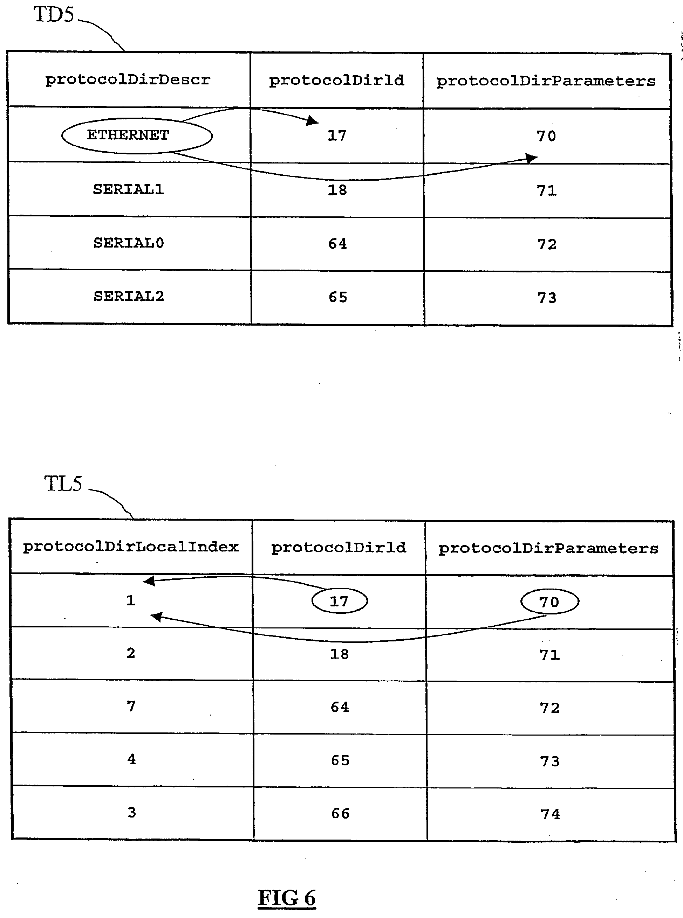

Sur la figure 6 est illustré le second processus de mise à jour qui permet de déterminer au moyen de la table TD5 que le couple de paramètres (17, 70) correspond au nom de description "ETHERNET", et que, au moyen de la table TL5, ce couple de paramètres (17, 70) correspond à l'index 1, c'est-à-dire l'interface I1. Le serveur peut ainsi exécuter la formule (1) en la remplaçant par :

*nlMatrixDSPkts[ protocolDirLocalIndex = 1 ]*

Bien sûr, l'invention n'est pas limitée aux exemples qui viennent d'être décrits et de nombreux aménagements peuvent être apportés à ces exemples sans sortir du cadre de l'invention.

## Revendications

1. Procédé d'adressage indirect pour localiser un élément cible (2-5) connecté à un routeur (1) supportant le protocole SNMP et incluant un support du standard RMON MIB, au sein d'un réseau de communication à partir d'un serveur (6) connecté à ce réseau et au moyen d'un lien composé d'un premier index et d'un nom de description, l'élément cible (2-5) portant ledit nom de description, et ledit premier index correspondant à un numéro d'interface (I1-I4) du routeur par lequel est connecté ledit élément cible (2-5) ; **caractérisé en ce que** :

   - le nom de description est défini dans le serveur (6) comme une valeur pouvant être affectée à une variable de description, ladite variable de description étant définie par au moins un paramètre de description,
   - le premier index est défini dans le serveur (6) comme une valeur pouvant être affectée à une variable d'indexation, ladite variable d'indexation étant définie par un ensemble de paramètres d'indexation, cet ensemble étant au moins un sous ensemble des paramètres de description ; et **en ce qu'**il comprend un processus de mise à jour dans lequel :

      - à partir dudit nom de description, on détermine au moyen d'une table de description (TD1-5) les valeurs de deux paramètres de description,
      - à partir des valeurs des deux paramètres de description ainsi déterminées, on détermine un second index au moyen d'une table d'indexation (TL1-5), et

      - on met à jour ledit lien désormais composé de ce second index et dudit nom de description, et dans lequel les paramètres de description et les index sont récupérés sur le routeur en utilisant le support RMON MIB.

2. Procédé selon la revendication 1 **caractérisé en ce qu'**il comprend en outre un processus de consultation dans lequel :

   - à partir d'une valeur de référence de chacun des deux paramètres de description, on détermine un nouveau nom de description au moyen de la table de description (TD1-5),
   - à partir d'un index de référence, on détermine de nouvelles valeurs des paramètres de description au moyen de la table d'indexation (TL1-5), et
   - on vérifie si le nouveau nom de description et les nouvelles valeurs des paramètres de description ainsi déterminés correspondent respectivement à un nom de description de référence et aux valeurs de référence des paramètres de description; dans l'affirmative on accède audit élément cible via un lien de référence; dans la négative on exécute le processus de mise à jour ;

   et **en ce que** les valeurs de référence des paramètres de description, le nom de description de référence, l'index de référence ainsi que le lien de référence correspondent aux données utilisées au cour d'une consultation précédente.

3. Système d'adressage indirect, comprenant un serveur, un routeur et un élément cible, pour localiser l'élément cible (2-5) connecté au routeur (1) supportant le protocole SNMP et incluant un support du standard RMON MIB, au sein d'un réseau de communication à partir du serveur (6) connecté à ce réseau et au moyen d'un lien composé d'un premier index et d'un nom de description, l'élément cible portant ledit nom de description, et ledit premier index correspondant à un numéro d'interface du routeur (I1-I4) à laquelle est connecté ledit élément cible (2-5) ; le serveur comprenant des moyens pour récupérer des informations relatives audit élément cible sur le routeur (1) en utilisant le support RMON MIB, **caractérisé en ce que** le serveur (6) comprend en outre, lors d'un processus de mise à jour :

   - des moyens pour déterminer, à partir dudit nom de description et au sein d'une table de description (TD1-5), les valeurs de deux paramètres de description,
   - des moyens pour déterminer, à partir des valeurs des deux paramètres de description ainsi déterminées et au sein d'une table d'indexation (TL1-5), un second index au moyen de la table d'indexation, et

- des moyens pour mettre à jour ledit lien désormais composé de ce second index et dudit nom de description, et dans lequel les paramètres de description et les index sont récupérés sur le routeur en utilisant le support RMON MIB.

4. Système selon la revendication 3, **caractérisé en ce que** le serveur (6) comprend en outre, lors d'un processus de consultation :

- des moyens pour déterminer, à partir d'une valeur de référence de chacun des deux paramètres de description, un nouveau nom de description au moyen de la table de description (TD1-5),
- des moyens pour déterminer, à partir d'un index de référence, de nouvelles valeurs des paramètres de description au moyen de la table d'indexation (TL1-5), et
- des moyens pour vérifier si le nouveau nom de description et les nouvelles valeurs des paramètres de description ainsi déterminés correspondent respectivement à un nom de description de référence et aux valeurs de référence des paramètres de description; dans l'affirmative, des moyens pour accéder audit élément cible via un lien de référence; dans la négative, des moyens pour exécuter le processus de mise à jour ;

et **en ce que** les valeurs de référence des paramètres de description, le nom de description de référence, l'index de référence ainsi que le lien de référence correspondent aux données utilisées au cour d'une consultation précédente.

## Patentansprüche

1. Verfahren zur indirekten Adressierung für die Ermittlung eines Zielelements (2-5), das mit einem Router (1) verbunden ist, welcher das SNMP Protokoll unterstützt und einen Agenten des RMON MIB Standards enthält, innerhalb eines Kommunikationsnetzwerks, von einem mit diesem Netzwerk verbundenen Server (6) ausgehend und anhand eines aus einem ersten Index und einem Beschreibungsnamen bestehenden Links, wobei das Zielelement (2-5) den Beschreibungsnamen trägt und der erste Index einer Schnittstellennummer (I1-I4) des Routers entspricht, über welchen das Zielelement (2-5) verbunden ist; **dadurch gekennzeichnet, dass**:

- der Beschreibungsname im Server (6) als einen Wert definiert wird, der einer Beschreibungsvariable zugewiesen werden kann, wobei diese Beschreibungsvariable über mindestens einen Beschreibungsparameter definiert wird,
- der erste Index im Server (6) als einen Wert definiert wird, der einer Indexierungsvariable zugewiesen werden kann, wobei diese Indexierungsvariable durch einen Satz von Indexierungsparametern definiert wird, wobei dieser Satz wiederum mindestens eine Untereinheit der Beschreibungsparameter ist, und dadurch, dass es einen Aktualisierungsprozess umfasst, in dem:

- auf der Grundlage des Beschreibungsnamen die Werte zweier Beschreibungsparameter anhand einer Beschreibungstabelle (TD1-5) bestimmt werden,
- auf der Grundlage der derart bestimmten Werte der beiden Beschreibungsparameter ein zweiter Index anhand einer Indexierungstabelle (TL1-5) bestimmt wird, und
- der nunmehr aus diesem zweiten Index und dem Beschreibungsnamen bestehende Link aktualisiert wird,

und in welchem die Beschreibungsparameter und die Indexe auf dem Router unter Verwendung des RMON MIB Agenten empfangen werden.

2. Verfahren nach Anspruch 1, **dadurch gekennzeichnet, dass** es außerdem einen Abfrageprozess umfasst, in welchem:

- auf der Grundlage eines Referenzwerts der jeweils beiden Beschreibungsparameter ein neuer Beschreibungsname anhand der Beschreibungstabelle (TD1-5) bestimmt wird,
- auf der Grundlage eines Referenzindexes neue Werte der Beschreibungsparameter anhand der Indexierungstabelle (TL1-5) bestimmt werden, und
- geprüft wird, ob der neue Beschreibungsname und die neuen Werte der derart bestimmten Beschreibungsparameter jeweils einem Referenzbeschreibungsnamen und den Referenzwerten der Beschreibungsparameter entsprechen; wenn ja wird auf das Zielelement über einen Referenzlink zugegriffen; wenn nein wird der Aktualisierungsprozess durchgeführt;

und dadurch, dass die Referenzwerte der Beschreibungsparameter, der Referenzbeschreibungsname, der Referenzindex sowie der Referenzlink den bei einer vorangegangenen Abfrage verwendeten Daten entsprechen.

3. System zur indirekten Adressierung, umfassend einen Server, einen Router und ein Zielelement, für die Ermittlung des Zielelements (2-5), das mit dem Router (1) verbunden ist, welcher das SNMP Protokoll unterstützt und einen Agenten des RMON MIB Standards enthält, innerhalb eines Kommunikationsnetzes ab dem mit diesem Netz verbundenen Server (6) und mit Hilfe eines aus einem ersten Index und einem Beschreibungsnamen bestehenden Links, wobei das Zielelement den Beschreibungsnamen trägt und der erste Index einer Schnittstellennummer des Routers (11-14) entspricht, mit welcher das Zielelement (2-5) verbunden ist; wobei der Server Mittel zum Empfangen von Daten über das Zielelement auf dem Router (1) unter Verwendung des RMON MIB Agenten umfasst, **dadurch gekennzeichnet, dass** der Server (6) außerdem bei einem Aktualisierungsprozess umfasst:

- Mittel zur Bestimmung der Werte zweier Beschreibungsparameter auf der Grundlage des Beschreibungsnamen und innerhalb einer Beschreibungstabelle (TD1-5),
- Mittel zur Bestimmung eines zweiten Indexes auf der Grundlage der derart bestimmten Werte beider Beschreibungsparameter und innerhalb einer Indexierungstabelle (TL1-5), und
- Mittel zur Aktualisierung des nunmehr aus diesem zweiten Index und dem Beschreibungsnamen bestehenden Links,

und in welchem die Beschreibungsparameter und die Indexe auf dem Router unter Verwendung des RMON MIB Agenten empfangen werden.

4. System nach Anspruch 3, **dadurch gekennzeichnet, dass** der Server (6) außerdem bei einem Abfrageprozess umfasst:

- Mittel zur Bestimmung eines neuen Beschreibungsnamen anhand der Beschreibungstabelle (TD1-5) auf der Grundlage eines Referenzwerts der jeweils beiden Beschreibungsparameter,
- Mittel zur Bestimmung neuer Werte der Beschreibungsparameter anhand der Indexierungstabelle (TL1-5) auf der Grundlage eines Referenzindexes, und
- Mittel zur Prüfung dessen, ob der neue Beschreibungsname und die neuen Werte der derart bestimmten Beschreibungsparameter jeweils einem Referenzbeschreibungsnamen und den Referenzwerten der Beschreibungsparameter entsprechen; wenn ja, Mittel zum Zugriff auf das Zielelement über einen Referenzlink; wenn nein, Mittel zur Durchführung des Aktualisierungsprozesses;

und dadurch, dass die Referenzwerte der Beschreibungsparameter, der Referenzbeschreibungsname, der Referenzindex sowie der Referenzlink den bei einer vorangegangenen Abfrage verwendeten Daten entsprechen.

**Claims**

1. Indirect addressing method for locating a target element (2-5) connected to a router (1) supporting the SNMP protocol and including a support for the RMON MIB standard, in a communication network from a server (6) connected to this network and by means of a link composed of a first index and a description name, the target element (2-5) having the said description name, and said first index corresponding to an interface number (I1-I4) of the router to which said target element (2-5) is connected, **characterized in that**:

- the description name is defined in the server (6) as a value that can be assigned to a description variable, said description variable being defined by at least said description parameter,
- the first index is defined in the server (6) as a value that can be assigned to an indexing variable, said indexing variable being defined by a set of indexing parameters, this set being at least a subset of the description parameters, and **in that** it comprises an updating process in which:

- from said description name, the values of two description parameters are determined by means of a description table (TD1-5),
- from the two description parameters values thus determined, a second index is determined by means of an indexing table (TL1-5), and

- the link henceforth composed of this second index and of the description name is updated,

and in which the description parameters and the index are retrieved on the router by using the RMON MIB support.

2. Method according to claim 1, **characterized in that** it furthermore comprises a consultation process in which:

- from a reference value of each of the two description parameters, a new description name is determined by means of the description table (TD1-5),
- from a reference index, new values of the description parameters are determined by means of the indexing table (TL1-5), and
- it is checked if the new description name and the new values of the description parameters thus determined respectively correspond to a reference description name and to the reference values of the description parameters; in the affirmative, the target element is accessed via a reference link; in the negative, the updating process is executed;

and **in that** the reference values of the description parameters, the reference description name, the reference index and the reference link correspond to data used during a preceding consultation.

3. Indirect addressing system, comprising a server, a router and a target element, for locating the target element (2-5) connected to the router (1) supporting the SNMP protocol and including a support of the RMON MIB standard, in a communication network from the server (6) connected to this network and by means of a link composed of a first index and a description name, the target element (2-5) having the said description name, and said first index corresponding to an interface number (I1-I4) of the router to which said target element (2-5) is connected, the server comprising means for retrieving information relating to said target element on the router (1) by using the RMON MIB support, **characterized in that** the server (6) furthermore comprises, during an updating process:

- means for determining, from the description name and within a description table (TD1-5), the values of two description parameters,
- means for determining, from the two description parameter values thus determined and within an indexing table (TL1-5), a second index by means of the indexing table, and
- means for updating said link henceforth composed of this second index and of said description name,

and in which the description parameters and the index are retrieved on the router by using the RMON MIB support.

4. System according to claim 3, **characterized in that** the server (6) furthermore comprises, during a consultation process:

- means for determining, from a reference value of each of the two description parameters, a new description name by means of the description table (TD1-5),
- means for determining, from a reference index, new values of the description parameters by means of the indexing table (TL1-5), and
- means for checking if the new description name and the new values of the description parameters thus determined respectively correspond to a reference description name and to said reference values of the description parameters; in the affirmative, means for accessing the said target element via a reference link; in the negative, means for executing the updating process;

and **in that** the reference values of the description parameters, the reference description name, the reference index and the reference link correspond to data used during a preceding consultation.

FIG.1

TD1

| protocolDirDescr | protocolDirId | protocolDirParameters |
|---|---|---|
| SERIAL0 | 17 | 70 |
| SERIAL1 | 18 | 71 |
| ETHERNET | 64 | 72 |
| SERIAL2 | 65 | 73 |

TL1

| protocolDirLocalIndex | protocolDirId | protocolDirParameters |
|---|---|---|
| 1 | 17 | 70 |
| 2 | 18 | 71 |
| 3 | 64 | 72 |
| 4 | 65 | 73 |

**FIG 2**

TD2

| protocolDirDescr | protocolDirId | protocolDirParameters |
|---|---|---|
| SERIAL0 | 17 | 70 |
| SERIAL1 | 18 | 71 |
| ETHERNET | 64 | 72 |
| SERIAL2 | 65 | 73 |

TL2

| protocolDirLocalIndex | protocolDirId | protocolDirParameters |
|---|---|---|
| 1 | 17 | 70 |
| 2 | 18 | 71 |
| 7 | 64 | 72 |
| 4 | 65 | 73 |
| 3 | 66 | 74 |

**FIG 3**

TD3

| protocolDirDescr | protocolDirId | protocolDirParameters |
|---|---|---|
| SERIAL0 | 17 | 70 |
| SERIAL1 | 18 | 71 |
| ETHERNET | 64 | 72 |
| SERIAL2 | 65 | 73 |

TL3

| protocolDirLocalIndex | protocolDirId | protocolDirParameters |
|---|---|---|
| 1 | 17 | 70 |
| 2 | 18 | 71 |
| 7 | 64 | 72 |
| 4 | 65 | 73 |
| 3 | 66 | 74 |

**FIG 4**

TD4

| protocolDirDescr | protocolDirId | protocolDirParameters |
|---|---|---|
| ETHERNET | 17 | 70 |
| SERIAL1 | 18 | 71 |
| SERIAL0 | 64 | 72 |
| SERIAL2 | 65 | 73 |

TL4

| protocolDirLocalIndex | protocolDirId | protocolDirParameters |
|---|---|---|
| 1 | 17 | 70 |
| 2 | 18 | 71 |
| 7 | 64 | 72 |
| 4 | 65 | 73 |
| 3 | 66 | 74 |

**FIG 5**

TD5

| protocolDirDescr | protocolDirId | protocolDirParameters |
|---|---|---|
| ETHERNET | 17 | 70 |
| SERIAL1 | 18 | 71 |
| SERIAL0 | 64 | 72 |
| SERIAL2 | 65 | 73 |

TL5

| protocolDirLocalIndex | protocolDirId | protocolDirParameters |
|---|---|---|
| 1 | 17 | 70 |
| 2 | 18 | 71 |
| 7 | 64 | 72 |
| 4 | 65 | 73 |
| 3 | 66 | 74 |

**FIG 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5588119 A

- US 6292909 B1